# EUROPÄISCHE PATENTSCHRIFT

(11) **EP 2 512 875 B1**
(45) Veröffentlichungstag und Bekanntmachung des Hinweises auf die Patenterteilung: **29.01.2014**
(21) Anmeldenummer: 10778948.9
(22) Anmeldetag: 03.11.2010
(51) Int. Cl.: B60R 25/02

(54) **ELEKTRONISCHE STEUERVORRICHTUNG FÜR EINE LENKRADSPERRE**
ELECTRONIC CONTROL DEVICE FOR A STEERING LOCKING DEVICE
DISPOSITIF DE CONTRÔLE ÉLECTRONIQUE POUR UN DISPOSITIF DE VERROUILLAGE DE DIRECTION

(30) Priorität: 16.12.2009 DE 102009054748
(43) Veröffentlichungstag der Anmeldung: 24.10.2012
(73) Patentinhaber: Continental Automotive GmbH, 30165 Hannover (DE)
(72) Erfinder: KLEINEBERG, Stefan, 63110 Rodgau (DE)
(74) Vertreter: Bonn, Roman Klemens
(86) Internationale Anmeldenummer: PCT/EP2010/066678
(87) Internationale Veröffentlichungsnummer: WO 2011/082858

(56) Entgegenhaltungen:
- EP-A1- 1 359 068
- EP-A2- 1 302 375
- DE-A1- 10 010 450
- DE-A1- 10 246 341
- DE-A1-102004 041 869

## Beschreibung

Die Erfindung betrifft eine elektronische Steuervorrichtung für eine Sperrvorrichtung sowie eine Lenkradsperre mit einer entsprechenden Steuervorrichtung.

Sperrvorrichtungen, insbesondere Lenkradsperren in Kraftfahrzeugen, müssen bestimmten Sicherheitsanforderungen genügen, um in kritischen Situationen einem ungewollten Sperren vorzubeugen. Denn ein ungewolltes Sperren einer Lenkradsperre kann zu sicherheitskritischen Fahrsituationen führen, die von einem Fahrer nicht mehr bewältigbar sind. Genannte Sicherheitsanforderungen sind beispielsweise durch die so genannten Sicherheits-Integritätslevel (SIL) oder im Automobilbereich durch Sicherheitsanforderungsstufen, die so genannten Automotive Safety Integry Level (ASIL), definiert.

Das Dokument DE 10010450 offenbart eine elektronische Steuervorrichtung nach dem Oberbegriff des Anspruchs 1.

Es ist eine Aufgabe der Erfindung, eine Steuervorrichtung für eine Sperrvorrichtung zu schaffen, die eine einfache Funktionalität und dennoch ein hohes Maß an Sicherheit gewährleistet. Ferner ist es eine Aufgabe der Erfindung, eine Lenkradsperre mit einer derartigen Steuervorrichtung zu schaffen.

In einem ersten Aspekt wird die Aufgabe durch eine elektronische Steuervorrichtung für eine Sperrvorrichtung nach Anspruch 1 bzw durch eine Lenkradsperre nach Anspruch 7 gelöst.

Eine derartige elektronische Steuervorrichtung hat den Vorteil, dass bei Blockieren eines sicherheitskritischen Steuerzustands weitere Funktionen der Steuervorrichtung verfügbar bleiben. Konkret bedeutet dies, dass lediglich ein Betätigen eines Stellgliedes zum Sperren einer Sperrvorrichtung verhindert wird, nicht aber ein Betätigen des Stellgliedes zum Lösen einer gesperrten Sperrvorrichtung. Somit gewährleistet die Steuervorrichtung einen hohen Schutz vor sicherheitskritischem Sperren einer Sperrvorrichtung.

Bevorzugt ist die Steuervorrichtung derart eingerichtet, dass bei Blockieren des ersten Steuerzustands durch die erste Abschaltvorrichtung automatisch der zweite Steuerzustand eingenommen wird. Das bedeutet, dass bei Auftreten einer sicherheitskritischen Situation automatisch ein Steuerzustand eingenommen wird, um eine Sperrvorrichtung freizugeben. Dadurch wird sichergestellt, dass die Sperrvorrichtung durch die Steuervorrichtung in diesem Fall freigegeben werden kann, wenn eine Gefahrensituation eintritt.

Vorzugsweise ist die erste Abschaltvorrichtung elektrisch zwischen der Spannungsversorgung und der Ansteuereinheit in einem Versorgungspfad für den ersten Steuerzustand angeordnet. Die erste Abschaltvorrichtung kann dabei den Versorgungspfad für den ersten Steuerzustand in der Ansteuereinheit auftrennen und somit eine Spannungsversorgung der Ansteuereinheit für den ersten Steuerzustand unterbrechen. Somit ist ein Blockieren des ersten Steuerzustands auf einfache, aber sichere Art und Weise gewährleistet.

Bevorzugt weist die Steuervorrichtung eine Schaltsteuereinheit zum Schalten des ersten Steuerzustands der Ansteuereinheit auf. Über die Schalt-Steuereinheit kann ein vordefiniertes Steuersignal erzeugt werden, welches zum definierten Einstellen des ersten Steuerzustands herangezogen wird.

Erfindungsgemäß ist die Schalt-Steuereinheit elektrisch derart vor der ersten Abschaltvorrichtung angeordnet, dass die erste Abschaltvorrichtung über die Schalt-Steuereinheit steuerbar ist. Das bedeutet, dass eine Auftrennung des Versorgungspfads für den ersten Steuerzustand durch die erste Abschaltvorrichtung über die Schalt-Steuereinheit gesteuert werden kann.

Vorzugsweise weist die Steuervorrichtung eine Freigabeeinheit zur Freigabe des Steuerns des ersten und des zweiten Steuerzustands der Ansteuereinheit auf. Durch die Freigabeeinheit kann über ein Freigabesignal bestimmt werden, ob die Steuerzustände überhaupt angesteuert werden können oder nicht. Die Freigabeeinheit stellt somit eine weitere Sicherheitseinrichtung dar. Ein konkretes Steuern des ersten oder des zweiten Steuerzustands obliegt der Freigabeeinheit jedoch nicht.

Erfindungsgemäß weist die Steuervorrichtung eine zweite Abschaltvorrichtung auf, welche elektrisch derart im Signalfluss zwischen der Freigabeeinheit und der Ansteuereinheit angeordnet ist, dass die zweite Abschaltvorrichtung über die Freigabeeinheit steuerbar ist. Die zweite Abschaltvorrichtung stellt neben der genannten ersten Abschaltvorrichtung eine weitere Notabschaltung dar, wobei die Ansteuereinheit dadurch gänzlich deaktiviert werden kann. Weder der erste noch der zweite Steuerzustand sind dann ansteuerbar.

Bevorzugt ist die Ansteuereinheit als H-Brückenschaltung mit vier Schaltelementen ausgeführt, wobei durch Einschalten von jeweils zwei korrespondierenden Schaltelementen zumindest der erste und der zweite Steuerzustand einstellbar sind. Eine derartige Ausführung der Ansteuereinheit erlaubt eine einfache Realisierung eines Vierquadrantenstellers, der unterschiedliche Betriebszustände eines elektromechanischen Stellglieds erzeugt.

In einem zweiten Aspekt wird die Aufgabe durch eine Lenkradsperre gelöst, umfassend
- ein Rastelement,
- ein Gegenrastelement im Kraftfluss einer Lenkung,
- ein elektromechanisches Stellglied, welches dazu eingerichtet ist, eine rastende Verbindung des Rastelements mit dem Gegenrastelement herzustellen, sodass eine Lenkbewegung blockiert ist, oder aufzuheben, sodass eine Lenkbewegung freigegeben ist, und
- eine elektronische Steuervorrichtung der beschriebenen Art und Weise, die zum Ansteuern mit dem Stellglied verbunden ist.

Die Lenkradsperre stellt eine konkrete Ausführung einer Sperrvorrichtung dar, welche über die vorgenannte Steuervorrichtung angesteuert wird. Dabei kann das Rastelement über das Stellglied in Eingriff mit dem Gegenrastelement gebracht werden, welches im Kraftfluss zwischen einem Lenkrad und den gelenkten Rädern einer Lenkung angeordnet ist. Gerade bei der Anwendung der Steuervorrichtung auf das Steuern der Lenkradsperre wird das hohe Maß an Sicherheit der Steuervorrichtung aufgrund der genannten Maßnahmen besonders vorteilhaft ausgenutzt. So ist bei Auftreten einer kritischen Situation gewährleistet, dass die Lenkradsperre nicht aktiviert werden kann. Eine derart gesteuerte Lenkradsperre stellt somit eine einfache Lösung dar, die dennoch in hohem Maße einem unerwünschten Sperren vorbeugt und somit ein hohes Sicherheitslevel (SIL-3 oder ASIL-D) erfüllt.

Die Erfindung wird nachfolgend anhand eines Ausführungsbeispiels in einer Figur beschrieben.

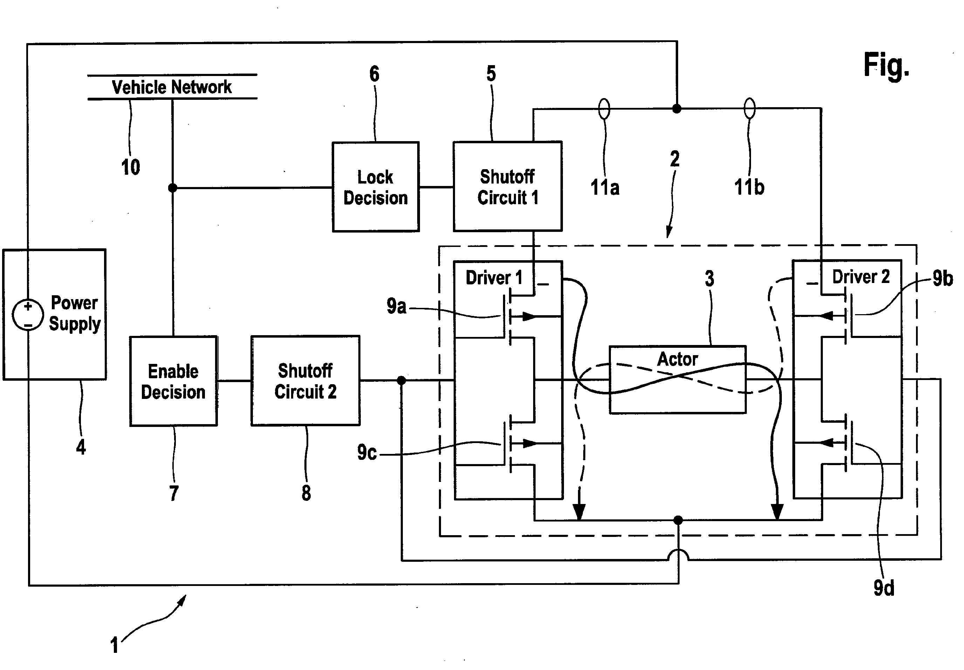

Die Figur zeigt die Steuervorrichtung 1, welche eine Ansteuereinheit 2 aufweist. Die Ansteuereinheit 2 ist durch einen gestrichelten Kasten gekennzeichnet und umfasst in dieser Ausführung zwei Komponenten (Driver 1 und Driver 2), welche jeweils zwei Schaltelemente aufweisen. In der Figur sind die Schaltelemente 9a und 9c der Komponente Driver 1 und die Schaltelemente 9b und 9d der Komponente Driver 2 der Ansteuereinheit 2 zugeordnet. Alle Schaltelemente 9a, 9b, 9c und 9d sind zu einer H-Brücke verschaltet, welche als Vierquadrantensteller zur Ansteuerung eines Stellglieds 3 (Actor) fungiert. Die Schaltelemente 9a, 9b, 9c und 9d sind beispielhaft als Feldeffekttransistoren (MOSFETs) ausgeführt. Das Stellglied 3 kann beispielsweise ein Elektromotor, insbesondere ein Gleichstrommotor, oder auch ein Elektromagnet sein.

Ferner wird die gesamte Ansteuereinheit 2 über eine Spannungsversorgung 4 mit elektrischer Energie versorgt. Insbesondere münden zwei Versorgungspfade 11a und 11b in die Ansteuereinheit 2, wobei der Versorgungspfad 11a die Komponente Driver 1 und der Versorgungspfad 11b die Komponente Driver 2 versorgt. Die Funktionsweise einer ersten Abschaltvorrichtung 5 (Shutoff Circuit 1), welche im Versorgungspfad 11a elektrisch vor der Ansteuereinheit 2 angeordnet ist, wird später näher erläutert.

Durch Einschalten der zwei Schaltelemente 9a und 9d kann ein erster Steuerzustand eingestellt werden, wobei ein elektrischer Strom über das Schaltelement 9a durch das Stellglied 3 zum Schaltelement 9d fließt. Dieser Steuerzustand ist durch einen durchgezogenen Pfeil dargestellt. Ein zweiter Steuerzustand kann durch Einschalten der beiden Schaltelemente 9b und 9c erzeugt werden, wobei in diesem Fall ein elektrischer Strom vom Schaltelement 9b in umgekehrter Richtung durch das Stellglied 3 zum Schaltelement 9c fließt. Dieser Strompfad ist durch einen gestrichelten Pfeil dargestellt. Je nachdem, ob der erste oder der zweite Steuerzustand eingestellt ist, wird ein entsprechender Betrieb des Stellelements 3 vorgegeben. Ein Rastelement einer Sperrvorrichtung kann dabei beispielsweise elektromotorisch oder elektromagnetisch angetrieben werden, sodass eine Rastverbindung des Rastelements mit einem Gegenrastelement hergestellt oder gelöst wird.

Nachfolgend wird die Funktionsweise der genannten ersten Abschaltvorrichtung 5 beschrieben, welche im Versorgungspfad 11a elektrisch vor der Ansteuereinheit 2 angeordnet ist. Die erste Abschaltvorrichtung 5 stellt eine Notabschaltung dar, wobei der Versorgungspfad 11a aufgetrennt werden kann, sodass eine Spannungsversorgung der Komponente Driver 1 der Ansteuereinheit 2, insbesondere eine Spannungsversorgung des Schaltelements 9a, unterbunden wird. Das Auftrennen des Versorgungspfads 11a durch die erste Abschaltvorrichtung 5 kann im einfachsten Fall durch Öffnen eines Schalters in der ersten Abschaltvorrichtung 5 erfolgen. Ein derartiger steuerbarer Schalter kann durch jegliche Art von Halbleiterschaltern, beispielsweise einem Bipolartransistor oder einem MOSFET, hergestellt werden.

Eine Unterbrechung der Spannungsversorgung im ersten Versorgungspfad 11a hat zur Folge, dass das Schaltelement 9a nicht mehr in einen leitenden Zustand versetzt werden kann, sodass es stromlos bleibt. Dies hat zur Konsequenz, dass der geschilderte erste Steuerzustand in durchgezogener Pfeilrichtung nicht eingenommen werden kann. Der erste Steuerzustand ist somit durch die erste Abschaltvorrichtung 5 blockiert.

Da der zweite Versorgungspfad 11b zur Komponente Driver 2 der Ansteuereinheit 2, jedoch durch die erste Abschaltvorrichtung 5 unbeeinflusst bleibt, ist das Schalten der Ansteuereinheit 2 in den zweiten Steuerzustand weiterhin möglich. Das Stellglied 3 kann somit durch einen Stromfluss in gestrichelter Pfeilrichtung weiterhin betrieben werden. Das bedeutet, dass ein Lösen einer Sperrvorrichtung durch das Stellglied 3 weiterhin möglich ist, während ein Sperren blockiert ist. Insbesondere bei der Anwendung der dargestellten Steuervorrichtung 1 in einer Lenkradsperre eines Kraftfahrzeugs ist dieses Verhalten besonders vorteilhaft.

Der ersten Abschaltvorrichtung 5 ist elektrisch eine Schalt-Steuereinheit 6 (Lock Decision) vorgeschaltet. Die Schalt-Steuereinheit 6 wird dabei über einen Steuerbus 10 (Vehicle Network) angesprochen und gesteuert, sodass entsprechende Steuerbefehle an die Schalt-Steuereinheit 6 weitergegeben werden können. Die Schalt-Steuereinheit 6 leitet aus einem oder mehreren Signalen des Steuerbusses 10 schließlich ein Steuersignal ab, welches an die erste Abschaltvorrichtung 5 weitergegeben wird, um diese anzusteuern. Somit ist es möglich, über das Steuersignal der Schalt-Steuereinheit 6 in Verbindung mit der ersten Abschaltvorrichtung 5 den ersten Versorgungspfad 11a aufzutrennen oder zu schließen und die Versorgungsspannung des Schaltelements 9a zur Erzeugung des ersten Steuerzustands zu blockieren oder einzuschalten.

Neben den bisher genannten Komponenten weist die Steuervorrichtung 1 zudem eine Freigabeeinheit 7 (Enable Decision) sowie eine elektrisch nachgeschaltete zweite Abschaltvorrichtung 8 (Shutoff Circuit 2) auf. Die Freigabeeinheit 7 wird über den Steuerbus 10 angesprochen und ist grundsätzlich dazu eingerichtet, die Freigabe des Steuerns der Schaltelemente 9a, 9b, 9c und 9d der Ansteuereinheit 2 über ein Freigabesignal anzuweisen. Dazu leitet die Freigabeeinheit 7 aus einem oder mehreren Signalen des Steuerbusses 10 ein Freigabesignal ab. Liegt ein derartiges Freigabesignal an der Ansteuereinheit 2 an, so können die Schaltelemente 9a, 9b, 9c und 9d an ihren Steuereingängen, beispielsweise über eine nicht dargestellte Steuereinheit, angesteuert werden. Andernfalls ist ein Ansteuern der Schaltelemente 9a, 9b, 9c und 9d wirkungslos. Das bedeutet, dass ohne Freigabe der Freigabeeinheit 7 keiner der beiden eingezeichneten Steuerzustände am Stellglied 3 erwirkt werden kann.

Die zweite Abschaltvorrichtung 8, welche der Freigabeeinheit 7 elektrisch nachgeschaltet ist, wird über das Freigabesignal der Freigabeeinheit 7 angesteuert, um eine Freigabe des Steuerns der Schaltelemente 9a, 9b, 9c und 9d der Ansteuereinheit 2 auszulösen oder zu blockieren. Dabei kann die zweite Abschaltvorrichtung 8 im einfachsten Fall als Schalter ausgeführt sein, der die Signalleitungen zwischen der Freigabeeinheit 7 und der Ansteuereinheit 2 schließt oder zur Notabschaltung auftrennt.

Der Steuerbus 10 kann bei Anwendung der Steuervorrichtung 1 im Automobilbereich zur Ansteuerung einer Lenkradsperre in einem Bordnetz integriert sein und beispielsweise einen CAN-Bus (CAN = Controller Area Network) oder jegliche andere Art eines Fahrzeugbussystems oder ein beliebiges Steuersignal darstellen.

Es ist denkbar, eine derartige Steuervorrichtung 1 zum Steuern jeglicher Sperrvorrichtung vorzusehen, bei der ein elektromagnetischer Aktor verwendet wird und bei der zumindest ein Sicherheitssignal vorgesehen ist, welches entscheidet, ob ein Sperren der Sperrvorrichtung erlaubt ist oder nicht. Die Ausführung aller Schaltelemente 9a, 9b, 9c und 9d ist hier lediglich beispielhaft gewählt. Es ist zweifellos denkbar, jegliche Art von Schaltelementen, insbesondere Leistungshalbleiter-Bauelemente einzusetzen.

Die Schalt-Steuereinheit 6 sowie die Freigabeeinheit 7 können sowohl als Hardwarekomponenten, wie auch als Softwarekomponenten oder als Kombination aus Hard- und Software ausgeführt sein.

### Bezugszeichenliste

- 1: Steuervorrichtung
- 2: Ansteuereinheit
- 3: Stellglied
- 4: Spannungsversorgung
- 5: erste Abschaltvorrichtung
- 6: Schalt-Steuereinheit
- 7: Freigabeeinheit
- 8: zweite Abschaltvorrichtung
- 9a, 9b, 9c, 9d: Schaltelement
- 10: Steuerbus
- 11a, 11b: Versorgungspfad

## Patentansprüche

1. Elektronische Steuervorrichtung (1) für eine Sperrvorrichtung, aufweisend
- eine Ansteuereinheit (2) mit zumindest zwei schaltbaren Steuerzuständen zum Ansteuern eines elektromechanischen Stellglieds (3), wobei die Sperrvorrichtung über das Stellglied (3) im ersten Steuerzustand gesperrt und im zweiten Steuerzustand gelöst werden kann,
- eine Spannungsversorgung (4) für den Betrieb des Stellglieds (3) im ersten oder im zweiten Steuerzustand der Ansteuereinheit (2),
- eine erste Abschaltvorrichtung (5), die derart im Signalfluss vor der Ansteuereinheit (2) angeordnet und eingerichtet ist, dass lediglich der erste Steuerzustand über die erste Abschaltvorrichtung (5) blockierbar ist und der zweite Steuerzustand über die erste Abschaltvorrichtung (5) unbeeinflussbar ist, **gekennzeichnet durch**
- eine Freigabeeinheit (7) zur Freigabe des Steuerns des ersten und des zweiten Steuerzustands der Ansteuereinheit (2), und
- eine zweite Abschaltvorrichtung (8), welche elektrisch derart im Signalfluss zwischen der Freigabeeinheit (7) und der Ansteuereinheit (2) angeordnet ist, dass die zweite Abschaltvorrichtung (8) über die Freigabeeinheit (7) steuerbar ist.

2. Elektronische Steuervorrichtung (1) nach Anspruch 1, die derart eingerichtet ist, dass bei Blockieren des ersten Steuerzustands durch die erste Abschaltvorrichtung (5) automatisch der zweite Steuerzustand eingenommen wird.

3. Elektronische Steuervorrichtung (1) nach Anspruch 1 oder 2, wobei die erste Abschaltvorrichtung (5) elektrisch zwischen der Spannungsversorgung (4) und der Ansteuereinheit (2) in einem Versorgungspfad (11a) für den ersten Steuerzustand angeordnet ist.

4. Elektronische Steuervorrichtung (1) nach einem der Ansprüche 1 bis 3, die eine Schalt-Steuereinheit (6) zum Schalten des ersten Steuerzustands der Ansteuereinheit (2) aufweist.

5. Elektronische Steuervorrichtung (1) nach Anspruch 4, wobei die Schalt-Steuereinheit (6) elektrisch derart vor der ersten Abschaltvorrichtung (5) angeordnet ist, dass die erste Abschaltvorrichtung (5) über die Schalt-Steuereinheit (6) steuerbar ist.

6. Elektronische Steuervorrichtung (1) nach einem der Ansprüche 1 bis 4, wobei die Ansteuereinheit (2) als H-Brückenschaltung mit vier Schaltelementen (9a, 9b, 9c, 9d) ausgeführt ist und durch Einschalten von jeweils zwei korrespondierenden Schaltelementen (9a, 9d; 9b, 9c) zumindest der erste und der zweite Steuerzustand einstellbar sind.

7. Lenkradsperre, umfassend
- ein Rastelement,
- ein Gegenrastelement im Kraftfluss einer Lenkung,
- ein elektromechanisches Stellglied (3), welches dazu eingerichtet ist, eine rastende Verbindung des Rastelements mit dem Gegenrastelement herzustellen, sodass eine Lenkbewegung blockiert ist, oder aufzuheben, sodass eine Lenkbewegung freigegeben ist, und
- eine elektronische Steuervorrichtung (1) nach einem der Ansprüche 1 bis 6, die zum Ansteuern mit dem Stellglied (3) verbunden ist.

## Claims

1. Electronic controller (1) for a locking device, comprising
- an actuation unit (2) having at least two switchable control states for actuating an electromechanical actuator (3), wherein the locking device can be locked in the first control state by means of the actuator (3) and can be released in the second control state,
- a voltage supply (4) for operating the actuator (3) in the first or in the second control state of the actuation unit (2),
- a first deactivation device (5) which is arranged upstream of the actuation unit (2) in the signal flow and is configured in such a way that only the first control state can be blocked by means of the first deactivation device (5) and the second control state cannot be influenced by means of the first deactivation device (5), **characterized by**
- an enabling unit (7) for enabling the control of the first and second control states of the actuation unit (2), and
- a second deactivation device (8) which is arranged electrically in the signal flow between the enabling unit (7) and the actuation unit (2) in such a way that the second deactivation device (8) can be controlled by means of the enabling unit (7).

2. Electronic controller (1) according to Claim 1, which is configured in such a way that when the first control state is blocked by the first deactivation device (5), the second control state is automatically assumed.

3. Electronic controller (1) according to Claim 1 or 2, wherein the first deactivation device (5) is arranged electrically between the voltage supply (4) and the actuation unit (2) in a supply path (11a) for the first control state.

4. Electronic controller (1) according to one of Claims 1 to 3, which has a switching control unit (6) for switching the first control state of the actuation unit (2).

5. Electronic controller (1) according to Claim 4, wherein the switching control unit (6) is arranged electrically upstream of the first deactivation device (5) in such a way that the first deactivation device (5) can be controlled by means of the switching control unit (6).

6. Electronic controller (1) according to one of Claims 1 to 4, wherein the actuation unit (2) is embodied as an H-bridge circuit with four switching elements (9a, 9b, 9c, 9d), and at least the first and second control states can be set by switching on in each case two corresponding switching elements (9a, 9d; 9b, 9c).

7. Steering wheel lock, comprising
- a latching element,
- a counter-latching element in the force flux of a steering system,
- an electromechanical actuator (3) which is configured to bring about a latching connection of the latching element to the counter-latching element with the result that a steering movement is blocked, or to cancel said latching connection with the result that a steering movement is enabled, and
- an electronic controller (1) according to one of Claims 1 to 6 which is connected to the actuator (3) for the purpose of actuation.

## Revendications

1. Dispositif de commande électronique (1) pour un dispositif de verrouillage, présentant
- une unité d'excitation (2) dotée d'au moins deux états de commande commutables destinée à exciter un composant de réglage électromécanique (3), le dispositif de verrouillage pouvant être verrouillé dans le premier état de commande et déverrouillé dans le deuxième état de commande au moyen du composant de réglage (3),
- une alimentation électrique (4) pour le fonctionnement du composant de réglage (3) dans le premier ou le deuxième état de commande de l'unité d'excitation (2),
- un premier dispositif de déconnexion (5) qui est agencé en amont de l'unité d'excitation (2) dans le flux de signaux et conçu de telle sorte que seul le premier état de commande peut être bloqué au moyen du premier dispositif de déconnexion (5) et que le deuxième état de commande ne peut pas être influencé par le premier dispositif de déconnexion (5),
**caractérisé par**
- une unité de déblocage (7) destinée à débloquer la commande du premier et du deuxième états de commande de l'unité d'excitation (2), et
- un deuxième dispositif de déconnexion (8) qui est agencé électriquement entre l'unité de déblocage (7) et l'unité d'excitation (2) dans le flux de signaux de telle sorte que le deuxième dispositif de déconnexion (8) peut être commandé au moyen de l'unité de déblocage (7).

2. Dispositif de commande électronique (1) selon la revendication 1, qui est conçu de telle sorte que lors du blocage du premier état de commande par le premier dispositif de déconnexion (5), le deuxième état de commande est adopté automatiquement.

3. Dispositif de commande électronique (1) selon la revendication 1 ou 2, le premier dispositif de déconnexion (5) étant agencé électriquement entre l'alimentation électrique (4) et l'unité d'excitation (2) selon un chemin d'alimentation (11a) pour le premier état de commande.

4. Dispositif de commande électronique (1) selon l'une quelconque des revendications 1 à 3, qui présente une unité de commande de commutation (6) destinée à commuter le premier état de commande de l'unité d'excitation (2).

5. Dispositif de commande électronique (1) selon la revendication 4, l'unité de commande de commutation (6) étant agencée électriquement en amont du premier dispositif de déconnexion (5) de telle sorte que le premier dispositif de déconnexion (5) peut être commandé au moyen de l'unité de commande de commutation (6).

6. Dispositif de commande électronique (1) selon l'une quelconque des revendications 1 à 4, l'unité d'excitation (2) étant réalisée comme circuit en pont en H muni de quatre éléments de commutation (9a, 9b, 9c, 9d) et au moins le premier et le deuxième états de commande pouvant être réglés en connectant, respectivement, deux éléments de commutation correspondants (9a, 9d ; 9b, 9c).

7. Blocage de volant, comprenant
- un élément d'arrêt,
- un élément de contre-arrêt dans le flux de forces d'une direction,
- un composant de réglage électromécanique (3) qui est conçu de manière à réaliser un assemblage encliquetable de l'élément d'arrêt avec l'élément de contre-arrêt de telle sorte qu'un mouvement de direction est bloqué ou à le supprimer, de telle sorte qu'un mouvement de direction est débloqué, et
- un dispositif de commande électronique (1) selon l'une quelconque des revendications 1 à 6, qui est relié au composant de réglage (3) aux fins de l'excitation.
